Europäisches Patentamt

European Patent Office

Office européen des brevets

(11) Numéro de publication : **0 323 783 B1**

(12) **FASCICULE DE BREVET EUROPEEN**

(45) Date de publication du fascicule du brevet :
08.04.92 Bulletin 92/15

(51) Int. Cl.$^5$ : **F16L 27/08,** F16L 27/10, B61H 13/38

(21) Numéro de dépôt : **88403327.5**

(22) Date de dépôt : **26.12.88**

(54) **Dispositif pour transmettre un fluide de commande à un dispositif de freinage de véhicule ferroviaire.**

(30) Priorité : **29.12.87 FR 8718309**

(43) Date de publication de la demande :
**12.07.89 Bulletin 89/28**

(45) Mention de la délivrance du brevet :
**08.04.92 Bulletin 92/15**

(84) Etats contractants désignés :
**BE CH DE ES FR GB IT LI NL**

(56) Documents cités :
**DE-B- 1 110 682**
**FR-A- 2 085 962**
**US-A- 4 103 939**

(73) Titulaire : **SOCIETE EUROPEENNE DE PROPULSION**
**24 rue Salomon de Rothschild**
**F-92150 Suresnes (FR)**

(72) Inventeur : **Joyeux, Jean-Pierre**
**7, rue Vineuse**
**F-75016 Paris (FR)**

(74) Mandataire : **Joly, Jean-Jacques et al**
**CABINET BEAU DE LOMENIE 55, rue d'Amsterdam**
**F-75008 Paris (FR)**

## Description

La présente invention concerne un ensemble de freinage de véhicule ferroviaire. Plus précisément, l'invention vise à fournir un dispositif permettant de transmettre un fluide hydraulique ou pneumatique sous pression entre une première pièce située du côté d'une source de fluide sous pression et une deuxième pièce située d'un côté du dispositif de freinage, la première et la deuxième pièces pouvant être animées de mouvements relatifs d'amplitude limitée.

Un dispositif de freinage de véhicule ferroviaire comprend généralement au moins un disque fretté sur chaque essieu du véhicule et des patins pouvant être serrés sur les faces opposées du disque au moyen d'un système de pinces actionnées par un vérin porté par le boggie du véhicule. Ainsi, le document FR-A-2 085 962 montre un ensemble de freinage de véhicule ferroviaire comprenant un frein hydrodynamique qui coopère avec un frein à friction dont les mâchoires sont actionnées par un cylindre de frein par l'intermédiaire d'une tringlerie. Lors du déplacement du véhicule, les mouvements de l'axe de l'essieu par rapport au boggie se traduisent par des déplacements relatifs entre les patins et le disque.

L'utilisation de matériau composite (carbone-carbone par exemple) pour la réalisation d'éléments de friction de freins de véhicules ferroviaires a été envisagée. Mais l'utilisation d'un tel matériau avec la structure classique évoquée ci-avant du dispositif de freinage présente des inconvénients.

La surface utile de freinage est réduite à la surface des patins, ce qui ne représente environ qu'un cinquième de la surface totale du disque. Lors du freinage, la surface utile du disque qui est portée à une température élevée effectue un trajet relativement long dans l'air, ce qui, en particulier dans le cas du carbone-carbone, favorise l'usure du matériau de friction par oxydation. De plus, cette surface utile est soumise à des projections d'eau qui provoquent une variation notable de l'efficacité du freinage. De plus encore, un serrage par un système de pinces mécaniques ne permet pas de répartir uniformément l'effort de serrage sur toute la surface des patins. L'effort de serrage s'exerce essentiellement au voisinage de la périphérie du disque, ce qui limite encore l'efficacité du freinage et conduit à une usure non uniforme.

De tels inconvénients n'existent pas dans les systèmes de freinage d'avion utilisant des éléments de friction en matériau composite tel que carbone-carbone car les freins sont formés par des empilages de disques stators et disques rotors et l'effort de freinage est exercé au moyen de vérins agissant directement sur les disques d'extrémité, avec une répartition de l'effort de freinage tout autour de l'axe des disques.

Une transposition de cette technique aux dispositifs de freinage de véhicules ferroviaires pose le problème de l'acheminement de la pression de commande de freinage au niveau de l'essieu. En effet, dans le domaine ferroviaire, l'utilisation de conduites flexibles à ce niveau est généralement proscrite en raison des risques de détériorations de ces conduites lors du roulement par des projections de ballast ou d'autres objets se trouvant sur la voie.

C'est pourquoi la présente invention a pour but de fournir un ensemble de freinage dans lequel un fluide de commande est transmis à un dispositif de freinage de véhicule ferroviaire, sans utiliser de conduite flexible, entre une première pièce, reliée à une source de fluide par une conduite d'alimentation portée par un boggie du véhicule, et une deuxième pièce, qui est solidaire du dispositif de freinage monté sur un essieu de roue du véhicule.

Ce but est atteint, conformément à l'invention, du fait que la première et la deuxième pièces sont reliées l'une à l'autre par un lamifié formé par un empilement de couches alternativement en caoutchouc et en métal adhérant les unes aux autres et dont les couches extrêmes sont fixées respectivement à la première et à la deuxième pièce, et la transmission du fluide de commande est effectuée à travers un passage qui traverse les couches du lamifié et dont les extrémités sont raccordées respectivement à la conduite d'alimentation pour relier le passage à la source de fluide et à une conduite rigide solidaire de la deuxième pièce et reliant le passage au dispositif de freinage.

Ainsi, l'ensemble de freinage selon l'invention est remarquable en ce qu'il utilise les capacités de déformation du lamifié, d'une part, pour réaliser la liaison mécanique entre les deux pièces mobiles l'une par rapport à l'autre et, d'autre part, pour acheminer le fluide de commande sans nécessiter à cet effet une conduite souple spécifique. Les déformations du lamifié sous l'effet des mouvements relatifs entre les pièces induisent des déformations correspondantes du passage du fluide de commande sans perturber l'acheminement de celui-ci.

La formation d'un passage pour un fluide de commande à travers un lamifié sphérique est montrée dans le document US-A-4 103 939, mais il s'agit d'un lamifié faisant partie d'un dispositif de connexion de deux tronçons d'une conduite à plusieurs passages reliant une tête de puits immergée à la surface.

L'invention sera mieux comprise à la lecture de la description faite ci-après, à titre indicatif mais non limitatif, en référence aux dessins annexés sur lesquels :
– la figure 1 est une vue schématique partielle d'un dispositif de freinage de véhicule ferroviaire,
– la figure 2 est une vue schématique partielle montrant un ensemble de freinage selon l'invention avec un dispositif de freinage tel que celui de la figure 1,
– la figure 3 est une vue partielle en coupe suivant le plan III-III de la figure 2, et

– les figures 4 et 5 sont des vues partielles en coupe suivant le plan IV-IV de la figure 3 montrant le lamifié faisant partie de l'ensemble de freinage selon l'invention, à l'état non déformé et à l'état déformé.

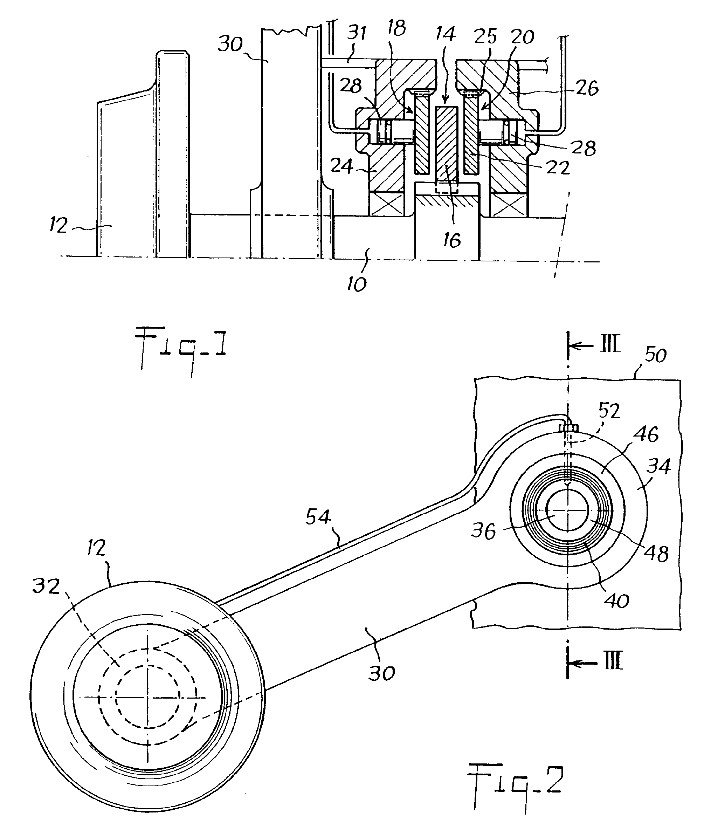

La figure 1 montre partiellement un essieu 10 de véhicule ferroviaire portant une roue 12 et sur lequel est fixé un disque de frein 14 (disque rotor). Le disque 14 est par exemple du type décrit dans la demande de brevet français No 83 20 496, c'est-à-dire comportant des garnitures de frottement 16 démontables en forme de secteurs de couronne supportés par une âme métallique solidaire de l'essieu. Les garnitures de frottement 16 sont réalisées avantageusement en matériau composite carbone-carbone et sont fixées sur l'âme métallique.

Le disque rotor 14 coopère avec deux disques stators 18, 20 situés de part et d'autre du disque rotor. Pour faciliter leur montage et leur démontage, les disques stators sont constitués par des secteurs de couronne juxtaposés munis chacun d'une garniture de frottement 22 en un matériau identique à celui des garnitures de frottement du disque rotor.

Les secteurs des disques stators sont logés dans des flasques 24, 26 montés sur l'essieu 10 avec interposition de roulements. Un vérin 28 est associé à chaque secteur de disque stator pour l'appliquer contre la face correspondante du disque rotor. Dans leurs déplacements sous l'action des vérins 28, les disques stators sont guidés au moyen de cannelures axiales 25 portées par les flasques 24, 26 et pénétrant dans des rainures formées à la périphérie des disques stators.

Une barre d'accouplement 31 solidarise en rotation les flasques des disques stators 18, 20 avec la ou chaque bielle 30 de support d'essieu qui relie l'essieu 10 à un boggie 50 (figure 2). A une première extrémité, la bielle 30 forme un palier 32 dans lequel tourne l'essieu 10 avec interposition d'un roulement. A son autre extrémité, la bielle 30 forme un palier 34 à travers lequel passe un axe 36 solidaire du boggie 50.

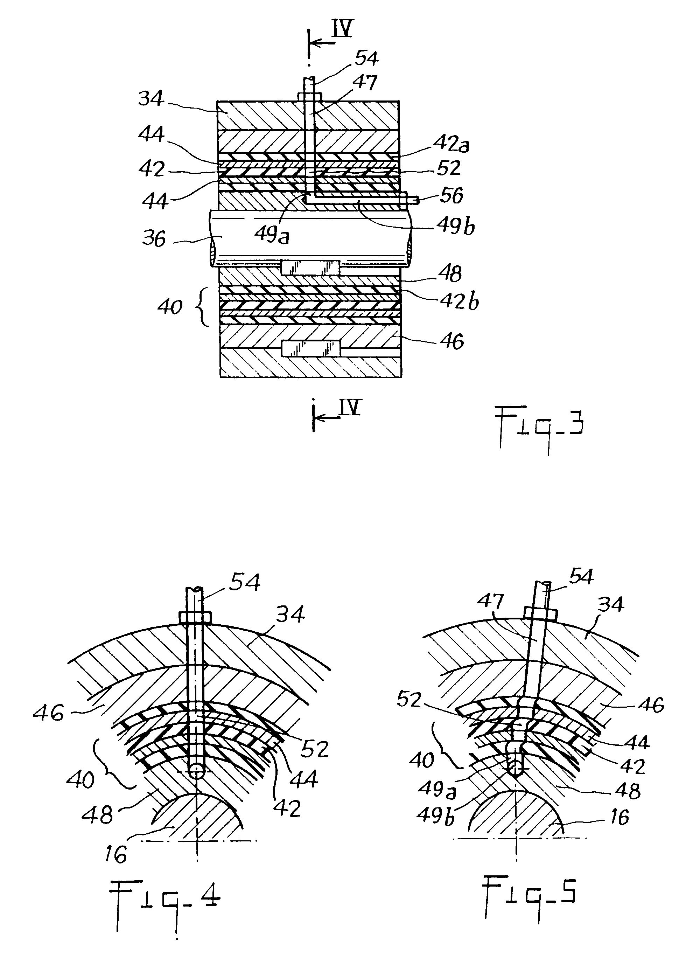

La bielle 30 est articulée autour de l'axe 36 par l'intermédiaire d'un lamifié cylindrique 40 formé, de façon connue en soi, par un empilement de couches cylindriques 42, 44 alternativement en caoutchouc et en métal adhérisées entre elles (figures 3 à 5). Les couches extrèmes en caoutchouc 42a, 42b sont adhérisées respectivement à une couronne métallique 46 et à une bague métallique 48. La couronne 46 est fixée à l'intérieur du palier 34 et est rendue solidaire en rotation de celui-ci, par exemple par clavetage. De façon similaire, la bague 48 est fixée sur l'axe 36 et est rendue solidaire en rotation de celui-ci, par exemple par clavetage.

L'ensemble constitué par les couches 42, 44, la couronne extérieure 46 et la bague intérieure 48 est assemblé en une seule opération au cours de laquelle sont réalisées la vulcanisation du caoutchouc des couches 42 et l'adhérisation de celles-ci aux couches métalliques 44 et aux pièces 46, 48.

Le dispositif de freinage formé par les disques 14, 18 et 20 est actionné par un fluide de commande sous pression, tel qu'un fluide hydraulique ou de l'air comprimé qui agit sur les secteurs des disques stators par l'intermédiaire de vérins 28.

Conformément à l'invention, le fluide de commande est acheminé aux vérins 28 depuis une source de fluide (non représentée) à travers un passage radial 52 formé à travers le lamifié.

A une extrémité, le passage 52 communique avec un perçage radial 47 formé à travers la couronne 46 et le palier 34, dans le prolongement du passage 52, perçage auquel est raccordée une conduite rigide 54 qui est fixée le long de la bielle 30 et alimente les vérins 28. A son autre extrémité, le passage 52 communique avec un canal formé dans la bague 48 et ayant une partie radiale 49a située dans le prolongement du passage 52 et une partie axiale 49b à laquelle est raccordée une conduite 56 portée par le boggie 50 et reliée à la source de fluide de commande.

Le fonctionnement du dispositif qui vient d'être décrit découle à l'évidence de ce qui précède.

Les vibrations de la roue 12 sur la voie se traduisent par des mouvements de la bielle 30 autour de l'axe 36 qui induisent des déformations du lamifié 40 avec cisaillement des couches de caoutchouc dans la limite de déformation élastique. Le passage 52 suit les déformations imposées au lamifié sans interrompre l'acheminement de fluide de commande. La figure 5 montre le lamifié 40 à l'état déformé ; le passage 52 prend alors la forme d'une succession de tronçons rectilignes, à travers les partie métalliques, raccordées par des tronçons courbes, à travers les couches de caoutchouc.

De la sorte, le fluide de commande est amené aux vérins 28 au moyen d'une conduite rigide 54, donc sans utiliser de flexible, le lamifié 40 remplissant la double fonction de liaison mécanique déformable élastiquement reliant le boggie à la bielle de support d'essieu et de conduite souple pour le fluide de commande.

Le fluide de commande est amené aux vérins 28 répartis régulièrement sur chaque face des disques stators 18, 20, autorisant l'application d'un effort de freinage uniforme et l'utilisation de toute la surface utile de frottement.

## Revendications

1. Ensemble de freinage de véhicule ferroviaire, comprenant une première pièce (46), reliée à une source de fluide par une conduite d'alimentation (56) portée par un boggie (50) du véhicule, une deuxième pièce qui est solidaire d'un dispositif de freinage monté sur un essieu (10) de roue du véhicule, et un dispositif pour transmettre un fluide de commande entre la première et la deuxième pièce, caractérisé en ce que le dispositif pour transmettre un fluide de commande comporte un lamifié (40) formé par un empilement de couches alternativement en caoutchouc (42) et en métal (44) adhérant les unes aux autres et dont les couches extrêmes sont fixées respectivement à la première et à la deuxième pièces, et la transmission du fluide de commande est effectuée à travers un passage (52) qui traverse les couches du lamifié et dont les extrémités sont raccordées respectivement à la conduite d'alimentation (56) pour relier le passage à la source de fluide, et à une conduite rigide (54) solidaire de la deuxième pièce et reliant le passage au dispositif de freinage.

2. Ensemble selon la revendication 1, caractérisé en ce que le lamifié (40) est de forme cylindrique et le passage (52) est formé radialement à travers les couches du lamifié.

3. Installation de freinage de véhicule ferroviaire, caractérisé en ce qu'elle comprend un ensemble selon l'une quelconque des revendications 1 et 2, dans lequel la conduite rigide (54) est portée par une bielle (30) de support de l'essieu (10), et le lamifié (40) est disposé entre un axe (36) solidaire du boggie et la bielle (30) de support d'essieu.

## Patentansprüche

1. Bremsvorrichtung für Schienenfahrzeuge mit einem ersten Teil (46), das über eine Speiseleitung (56) an einer Fluidquelle angeschlossen ist, wobei die Speiseleitung auf einem Drehgestell (50) des Fahrzeugs angeordnet ist, mit einem zweiten Teil, das mit einer Bremsvorrichtung fest verbunden ist, die auf einer Radachse (10) des Fahrzeugs montiert ist und mit einer Vorrichtung zur Übertragung eines Steuerfluids zwischen dem ersten und dem zweiten Teil, **dadurch gekennzeichnet**, daß die Vorrichtung zum Übertragen eines Steuerfluids ein laminiertes Teil (40) aufweist, bestehend aus einem Stapel abwechselnd aufeinander gestapelter Schichten aus Gummi (42) und Metall (44), die aufeinander kleben und von denen die Endschichten jeweils an dem ersten und dem zweiten Teil befestigt sind und dadurch, daß die Steuerfluidübertragung durch eine Passage (52) erfolgt, die die Schichten des laminierten Teils durchquert und dessen Enden jweils an die Speiseleitung (56) angeschlossen sind, um die Passage an die Fluidquelle anzuschließen und an eine steife Leitung (54), die mit dem zweiten Teil fest verbunden ist und mit der die Passage und die Bremsvorrichtung miteinander verbunden sind.

2. Bremsvorrichtung nach Anspruch 1, dadurch gekennzeichnet, daß das laminierte Teil (40) zylinderförmig ist und die Passage (52) radial durch die Schichten des laminierten Teils verläuft.

3. Bremsanlage für Schienenfahrzeuge, gekennzeichnet durch eine Vorrichtung nach einem der Ansprüche 1 und 2, bei der die steife Leitung (54) von einem Achslenker (30) der Radachse (10) getragen wird und das laminierte Teil (40) zwischen einer Achse (36), die dem Drehgestell befestigt ist und dem Achslenker angeordnet ist.

## Claims

1. Braking assembly for railway vehicle, comprising a first part (46), connected to a source of fluid via a supply pipe (56) carried by a bogie (50) of the vehicle, a second part which is fast with a braking device mounted on a wheel axle (10) of the vehicle, and a device for transmitting a control fluid between the first and second part, characterized in that the device for transmitting a control fluid comprises a laminate (40) formed by a stack of alternate layers of rubber (42) and metal (44), adhering one to the other, and of which the end layers are fixed respectively to the first and to the second part, and the control fluid is transmitted through a passage (52) traversing the layers of the laminate, the ends of which passage being connected respectively to the supply pipe (56) in order to connect the passage with the source of fluid, and to a rigid pipe (54) fast with the second part and connecting the passage with the braking device.

2. Assembly according to claim 1, characterized in that the laminate (40) is of cylindrical shape and the passage (52) is formed radially through the layers of the laminate.

3. Braking installation for railway vehicle, characterized in that it comprises an assembly according to any one of claims 1 and 2, wherein the rigid pipe (54) is carried by a connecting rod (30) supporting the axle (10), and the laminate (40) is placed between a spindle (36) fast with the bogie and the connecting rod (30) supporting the axle.

Fig-1

Fig-2

Fig-3

Fig-4

Fig-5